# EUROPEAN PATENT APPLICATION

(11) **EP 2 224 146 A1**
(43) Date of publication of application: **01.09.2010**
(21) Application number: 08864443.0
(22) Date of filing: 17.12.2008
(51) Int. Cl.: F16C 33/20, C23C 22/12, C23C 22/22, F16C 17/04, F16C 33/10

(54) **SLIDING MEMBER FOR THRUST BEARING**

(30) Priority: 21.12.2007 JP 2007330698
(71) Applicant: Taiho Kogyo Co., Ltd, Toyota-shi Aichi 471-8502 (JP)
(72) Inventor: YAMANE, Kyouhei, Toyota-shi, Aichi 4718502 (JP); HAKAMATA, Mitsuaki, Toyota-shi, Aichi 4718502 (JP); SAKAMOTO, Norihiro, Toyota-shi, Aichi 4718502 (JP)
(74) Representative: Grünecker, Kinkeldey, Stockmair & Schwanhäusser Anwaltssozietät
(86) International application number: PCT/JP2008/073018
(87) International publication number: WO 2009/081825

(57) **Abstract**

The present invention aims to provide a highly heat-resistant sliding member for thrust bearing which can be manufactured at a low cost through formation of an intermediate layer by a conversion treating method for cost reduction, includes a chemical conversion coating formed on an iron-base member and a resin film containing a thermosetting resin and a solid lubricant which is formed on the chemical conversion coating, and can resist to high temperatures of 200°C or higher. And the invention is concerned with the sliding member for thrust bearing, **characterized by** including an iron-base member performed shot blast treatment on which the chemical conversion coating of zinc calcium phosphate is formed and a resin film containing a thermosetting resin requiring baking at temperatures of 200°C or higher and the solid lubricant is further formed.

## Description

### Technical Field

The present invention relates to a sliding member for thrust bearing. More specifically, the invention relates to the sliding member for thrust bearing, which has a chemical conversion coating of zinc calcium phosphate, a thermosetting resin and a solid lubricant is formed on an iron-base member. Thereby, an adherence property between the iron-base member and the resin film is excellent, and a heat resistance of the sliding member for thrust bearing is also excellent.

### Related Art

In general, it is difficult for a thrust bearing to form wedge oil film, which is formed by rotation of shaft, and to provide a sufficient degree of lubricating oil with a sliding surface compared with a radial bearing, therefore, the thrust bearing is often used in the boundary lubrication condition. That is, sliding conditions of the thrust bearing are harsh compared with those of the radial bearing, thereby, the sliding member for thrust bearing basically has a resin film containing a thermosetting resin and a solid lubricant, which formed on a metallic base member such as an iron-base member, for withstanding such harsh sliding conditions.

For example, such the sliding member for thrust bearing is used for the swash plate of a swash plate-type compressor. The swash plate-type compressor compresses gas in a cylinder by a reciprocating motion of a piston in the cylinder while following a rotating motion of the swash plate, and the swash plate slides toward a shoe serving as a mating member located between the swash plate and the piston. The swash plate of the swash plate-type compressor is applied to high pressure from the shoe while high-speed rotation.

Therefore, a sliding member for thrust bearing used for the swash plate of the swash plate-type compressor is required to have high heat resistance because there are some cases that temperatures of the sliding member reaches high temperatures of approximately 200°C due to slide. Accordingly, a resin film formed on the sliding member for thrust bearing is required to have high heat resistance enough to resist high temperatures of approximately 200°C, consequently, a thermosetting resin that generally has high heat resistance is used as a resin component. Therefore, when the sliding member for thrust bearing is manufactured, curing is carried out at temperatures of 200°C or higher in final manufacturing step after formation of the resin film.

As for the sliding member for thrust bearing coated on the resin film, an intermediate layer is provided between the metallic base member and the resin film so as to improve an adherence property between the metallic base member and the resin film and to prevent the metallic base member from seizure due to exposure thereof. Then, the intermediate layer is generally formed in accordance with a metal spraying method or a metal sintering method. However, since the metal-spraying and metal-sintering methods entail high cost, as a method of forming the intermediate layer at lower cost, a formation of a chemical conversion coating of manganese calcium phosphate and zinc calcium phosphate by a conversion treating method to use a solution of manganese calcium phosphate or zinc calcium phosphate is attracting attention (refer e.g. Patent Document 1).
Patent Document 1: Japanese Patent Unexamined Application Publication No. JP-A-58-081220

### Disclosure of the Invention

### Problem to be solved by the Invention

In the conventional a sliding member for thrust bearing, when an intermediate layer is formed by a metal spraying method or a metal sintering method, though these methods entail high cost, it is easy to obtain the intermediate layer having high heat resistance enough to resist high temperatures of 200°C or higher without occurrence of blister of the intermediate layer even if the resin film is cured at temperatures of 200°C or higher in a final manufacturing step. On contrary, when an intermediate layer is formed by a conversion treating method so as to reduce cost, a sliding member having high heat resistance capable of resisting high temperatures of 200°C or higher is not obtained. This is because blister of a resin film occurs due to a generation of gas by a cracking of the chemical conversion coating under curing at temperatures of 200°C or higher in the final manufacturing step.

Therefore, an object of the present invention is to provide a sliding member for thrust bearing having high heat resistance capable of resisting high temperatures of 200°C or higher. The sliding member for thrust bearing has a chemical conversion coating and a resin film containing a thermosetting resin and a solid lubricant on an iron-base member. Further, an intermediate layer could be formed by a conversion treating method so as to reduce cost.

### Means for Solving the Problem

As a result of our study to attain the object, the present inventor has found that the chemical conversion coating of zinc calcium phosphate has high heat resistance, and no generation of gas due to cracking of the chemical conversion coating, and no blister or the like of a resin film occur under temperatures of 200°C or higher in a final manufacturing step. The present inventor has further found that iron-base member can be strongly adhered to the resin film via the chemical conversion coating. Thus the invention is achieved.

That is, for attaining the above mentioned object, according to the present invention, there are provided following aspects.
(1) A sliding member for thrust bearing, wherein
   a chemical conversion coating of zinc calcium phosphate is formed on an iron-base material treated by a shot blast treatment, and
   a resin film containing a thermosetting resin requiring baking at temperatures of 200°C or higher and a solid lubricant is formed.
(2) The sliding member for thrust bearing as set forth in (1), wherein the thermosetting resin is a polyamide resin or a polyamideimide resin.
(3) The sliding member for thrust bearing as set forth in (1) or (2), wherein the solid lubricant is at least one of substance selected from the group including fluorocarbon polymers, graphite and molybdenum disulfide.

### Advantage of the Invention

According to the present invention, the sliding member for thrust bearing having an excellent heat resistance enough to resist high temperatures of 200°C or higher is provided, because no generation of gas due to cracking of the chemical conversion coating of an intermediate layer occur when the resin film is cured at temperatures of 200°C or higher.
In addition, a surface area of a base member is increased by performing shot blast treatment before chemical conversion coating process, and thereby adhesion property between the iron-base member and the chemical conversion coating is improved.
Further, even when an underlayer of the sliding member is exposed by sliding in longtime use, the chemical conversion coating and the resin film are in a mixed condition, so it is difficult for sliding member to be occurred to seizure as compared with the case where a mating member is mainly composed of iron. That is, even when the iron-base member is exposed by wearing out both the resin film and the chemical conversion coating at convex areas in the iron-base member surface roughened by shot blast treatment, either the chemical conversion coating or the resin film, or both remain in concave areas in the roughened iron-base member surface. Therefore, it is difficult for sliding member to be occurred to seizure with the mating member as compared with the case where the iron-base member having a smooth surface without performing shot blast treatment is exposed.

### Brief Description of the Drawings

Fig. 1 shows a result of differential thermal analysis of zinc calcium phosphate.
Fig. 2 shows a result of differential thermal analysis of manganese phosphate.
Fig. 3 shows a result of differential thermal analysis of zinc phosphate.
Fig. 4 shows an outward appearance of the swash plate formed in Example 1.
Fig. 5 shows an outward appearance of the swash plate formed in Comparative Example 1.
Fig. 6 shows schematic diagram of a high-pressure atmosphere frictional abrasion testing apparatus used in testing each of the swash plates formed in Example 1 and Comparative Example 2 for high-pressure atmosphere frictional abrasion test.
Fig. 7 shows graphs of the time-varying temperature of the shoe' s back brought in contact with each of the swash plates formed in Example 1 and Comparative Example 2, which are in testing for high-pressure atmosphere frictional abrasion, and graphs of the time-varying friction coefficient of each of the swash plates in the testing.
Fig. 8 shows an outward appearance of the swash plate formed in Example 1 after a high-pressure atmosphere frictional abrasion test.
Figs. 9 (a) and 9 (b) show an outward appearance of the swash plate formed in Comparative Example 2 after a high-pressure atmosphere frictional abrasion test.
Figs. 10(a) to 10(e) show an outward appearance of the swash plate formed in Example 1 after a high-pressure atmosphere frictional abrasion test, and appearances of a part of the swash plate magnified by a scanning electron microscope.

### Description of Reference Numerals

- 1: Rotary shaft
- 2: Swash plate
- 3: Shoe
- 4: Receiving jig
- 5: Fixed shaft

### Best Mode for Carrying Out the Invention

The iron-base member used in the present sliding member for thrust bearing can be appropriately selected from currently using material as iron-base member of sliding members for thrust bearing such as carbon steel. And in the present invention, after the iron-base member is treated by shot blast treatment, the chemical conversion coating is formed thereon. The shot blast treatment can be performed according to the well-known method for shot blast treatment in which a base member surface is sprayed with fine particles of a shot material under high pressure. In addition, a surface roughness Rz of the iron-base member is preferably controlled to the range of 1 to 15µm by the shot blast treatment. Further, the shot blast treatment brings the iron-base member an increased surface area, and adhesion property between the iron-base member and the chemical conversion coating is improved. Furthermore, a surface area of the chemical conversion coating also is increased, and the adhesion property between the chemical conversion coating and the resin film is improved.

The chemical conversion coating of zinc calcium phosphate formed as the intermediate layer on the iron-base member in the invention is formed by using an aqueous solution for formation of the chemical conversion coating of zinc calcium phosphate. For example, an aqueous solution contains ions of zinc, ions of calcium and ions of phosphoric acid. Then, the chemical conversion coating is formed by immersing the iron-base member treated by shot blast treatment in the aqueous solution for formation of the chemical conversion coating and then drying that, without restriction as to the formation method thereof. In addition, a thickness of the formed chemical conversion coating of zinc calcium phosphate is appropriately adjustable as required, particularly, preferable the thickness of 10 µm or thinner except for 0 µm.

In the present invention, on the chemical conversion coating of zinc calcium phosphate formed as the intermediate layer on the iron-base member, the resin film containing the thermosetting resin required curing at temperatures of 200°C or higher and the solid lubricant is formed. At this time, as the resin component of the resin film, various thermosetting resins having excellent heat resistance such as polyimide resins and polyamideimide resins utilized in sliding members for thrust bearing are useable, especially, polyimide resins and polyamideimide resins are preferable to use, further, polyimide resins are more especially preferable to use from the viewpoint of sliding characteristics, particularly under low friction, at high temperatures. As to the thermosetting resin, one kind of the thermosetting resin can be used by itself, or two or more kinds of the thermosetting resins can be used in a mixed state as required. To be specific, thermosetting resins, such as TORENIECE (trademark) manufactured by TORAY INDUSTIRIES, INC. and U-VARNISH manufactured by UBE INDUSTRIES, LTD., can be preferably used. The resin component content in the resin film is appropriately adjustable as required, generally, the content of 30% to 80% by volume is preferable, in particular, more preferable from 40% to 70% by volume.

On the other hand, as the solid lubricant in the resin film, various solid lubricants utilized in sliding members for thrust bearing can be used. For example, fluorocarbon polymers such as polytetrafluoroethylene, graphite, molybdenum disulfide, tungsten disulfide and boron nitride, can be used, especially, fluorocarbon polymers, graphite and molybdenum disulfide are preferably used. As to the solid lubricant, one kind of solid lubricant can be used by itself, or a mixture of two or more kinds of solid lubricants can be used as required. In addition, it is preferred that the average particle size of solid lubricants is from 0.1 to 45 µm. Further, titanium oxide particles, copper oxide particles, alumina particles or the like may be added as a friction controlling agent. The average particle size of these friction controlling agents is preferably from 1 nm to 10 µm. The solid lubricant content in the resin film is preferable from 20% to 70% by volume, especially, preferable from 30% to 60% by volume, though it is appropriately adjustable as required.

Formation of the resin film can be carried out according to a traditional method for formation of a resin film in a sliding member for thrust bearing. In general, a coating composition for formation of the resin film is initially prepared by mixing predetermined amounts of the thermosetting resin and the solid lubricant and an appropriate amount of organic solvent by using a Henschel mixer, a super mixer, a ball mill, a tumbler mixer, a bead mill, a kneader or the like. Herein, the organic solvent which can dissolve the used thermosetting resin is usable, for example, depending on the kind of the used thermosetting resin, N-methyl-2-pyrrolidone, xylene, alcohol or the like can be used. The amount of the used organic solvent is adjustable according to the required viscosity of the resin film coating to obtain as appropriate.
Subsequently, the prepared coating composition for formation of the resin film is coated on the chemical conversion coating of zinc calcium phosphate formed as the intermediate layer on the iron-base member by a spraying method, a roll coating method, a dipping method, screen printing, pad printing or the like, and a coated film of the coating composition for formation of the resin film is dried and cured. Thus, the resin film can be formed.
Herein, drying of the coated film of the coating composition for formation of the resin film may be carried out with a drying oven, and curing may be carried out with an inert furnace at temperatures that is 200°C or higher but below the decomposition points of resin component and solid lubricant component. In addition, the thickness of the resin film is preferable from 2 to 50 µm, though appropriately adjustable as required. The curing time is preferable from 10 minutes to 2 hours, though dependent on the curing temperatures. The present sliding member for thrust bearing is carried out the curing at temperatures of 200°C or higher.

The present sliding member for thrust bearing is suitable for extensive application to swash plates of swash plate-type compressors and slide member of a wide variety of machines, and more specifically, it is suitably applicable to slide member of thrust slide bearings such as a washer.

### Example

The invention will now be illustrated in more detail by reference to examples, but the invention should not be construed as being limited to the following examples in any way.

### (Differential Thermal Analysis)

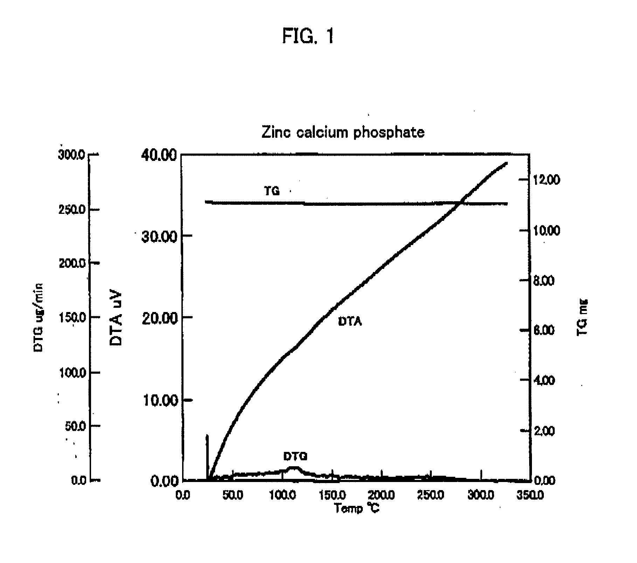

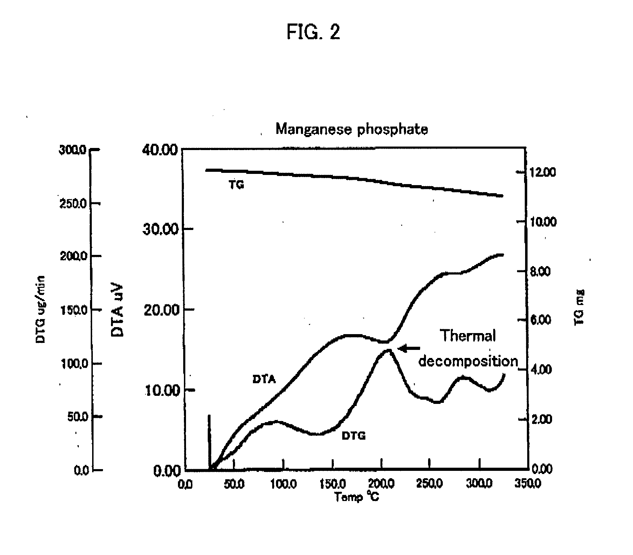

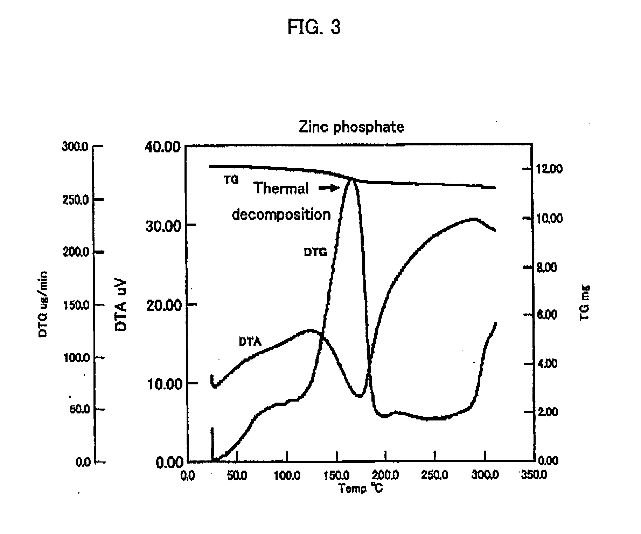

A differential thermal analysis is performed on each of zinc calcium phosphate, manganese phosphate and zinc phosphate in a N₂ atmosphere at a temperature range setting from 26°C to 350°C with a rate of temperature rise of 15 cel/min. Results of the differential thermal analysis performed on zinc calcium phosphate are graphed as shown in Fig. 1, results of the differential thermal analysis performed on manganese phosphate are graphed as shown in Fig. 2, and results of the differential thermal analysis performed on zinc phosphate are graphed as shown in Fig. 3.
As can be seen from these graphs of the differential thermal analysis results, it is found that no cracking occurred in using zinc calcium phosphate even when its temperature reached 350°C, while cracking occurred at temperatures of about 200°C in using manganese phosphate and cracking occurred at temperatures of about 170°C in using zinc phosphate.

### <EXAMPLE 1>

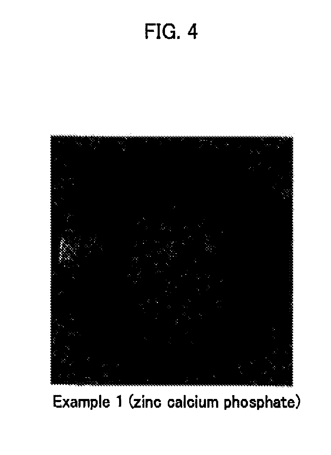

A shot blast-treated iron swash-plate base member having surface roughness Rz in a range of 1 to 10 µm is immersed in an aqueous solution of zinc calcium phosphate, and dried in a drying oven afterwards. Thus, a 3 µm-thick chemical conversion coating of zinc calcium phosphate as an intermediate layer is formed on the base member. Then, 60% by volume of a polyamideimide resin manufactured by Hitachi Chemical Co., Ltd., 20% by volume of polytetrafluoroethylene manufactured by KITAMURA LIMITED, and 20% by volume of graphite manufactured by Nippon Graphite Industries, Ltd., whose average particle size is 1 µm, are mixed with an appropriate amount of N-methyl-2-pyrrolidone as an organic solvent by a kneading machine to prepare a coating composition for formation of a resin film. The coating composition for formation of the resin film is coated by roll coating on the chemical conversion coating of zinc calcium phosphate formed as an intermediate layer on the iron swash-plate base member. Then, a coating film of the coating composition for formation of the resin film is dried in a drying oven. Thereafter, the coating film is cured at 270°C for 1 hour in an inert furnace. The resin film obtained after curing is turned off by a lathe so as to form predetermined numbers of grooves arranged concentrically, which have a depth of 1 to 10 µm and a pitch of 0.05 to 0.20 mm, in the resin film surface, and thereby a swash plate for swash plate-type compressor is made.
In the swash plate thus made, the resin film is strongly adhered to the iron swash-plate base member via the chemical conversion coating of zinc calcium phosphate. A photograph of the outward appearance of the obtained swash plate is shown in Fig. 4. Further, the obtained swash plate is examined to the high-pressure atmosphere frictional abrasion test as described hereinafter.

### <Comparative Example 1>

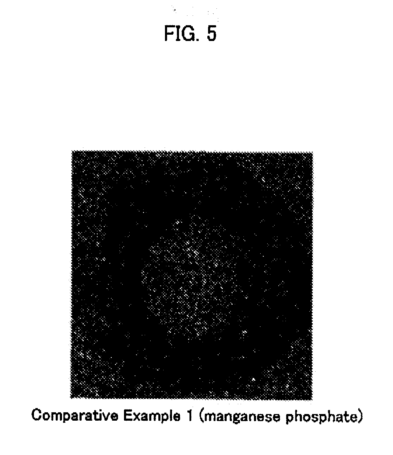

A swash plate is made in the same manner as in Example 1, except that a manganese phosphate chemical conversion coating is formed as an intermediate layer by using manganese phosphate in place of the zinc calcium phosphate in Example 1.
The thus obtained swash plate has blister in the resin film, and it is poor in adhesion of the resin film to the iron swash-plate base member. A photograph of the outward appearance of the obtained swash plate is shown in Fig. 5.

### <Comparative Example 2>

A swash plate is made in the same manner as in Example 1, except that the chemical conversion coating of zinc calcium phosphate formed as the intermediate layer in Example 1 is not formed. The obtained swash plate thus is examined to the rotational loading test as described hereinafter.

### (Adhesion Strength Test)

By using the Shimadzu Autograph made by SHIMADZU Corporation, adhesion strength tests are carried out the obtained swash plates in Example 1 and Comparative Example 2, respectively.

Testing condition: A jig is adhered to the resin film surface of the swash plate with an adhesive agent, and the jig is pulled outward in the direction of the radius of the swash plate.

### (Test Result)

Obtained test results are shown in Table 1.

**Table 1**

| | Tensile strength test (MPa) | | |
|---|---|---|---|
| | First time | Second time | Third time |
| Example 1 | 43 | 40 | 44 |
| Comparative Example 2 | 38 | 37 | 38 |

It is apparent from the results shown in Table 1 that the present sliding member for thrust bearing is superior in adhesion.

### (High-pressure Atmosphere Frictional Abrasion Test)

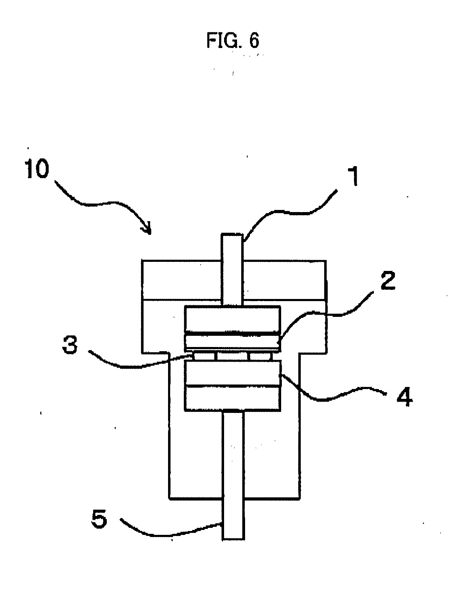

By using the high-pressure atmosphere frictional abrasion testing apparatus 1 shown in Fig. 6, each of the swash plates obtained in Example 1 and Comparative Example 2 are carried out the high-pressure atmosphere frictional abrasion test under the following conditions. The testing apparatus is equipped with a swash plate 2 fixed to the bottom of a rotary shaft 1, also three shoes 3 mounted on the upper face of a receiving jig 4, and thereby configured to apply to an upward load by a fixed shaft 5. And the swash plate 2 is designed to rotate against the shoes 3 when the rotary shaft 1 is rotated.
Testing conditions: The rotation number is kept constant at 1,000 rpm. The load is held at 7.5 MPa. The testing time is set at 360 minutes.
Lubricating condition: Refrigerant atmosphere drying condition

### (Evaluation Criterion and Test Result)

Evaluation criterion: Completion of the running at 1, 000 rpm under 7.5 MPa for 360 minutes is taken as the acceptance line.
Test result: The swash plate made in Example 1 clears the acceptance line.
The swash plate made in Comparative Example 2 occurs to seizure when the running continued for 68 minutes.

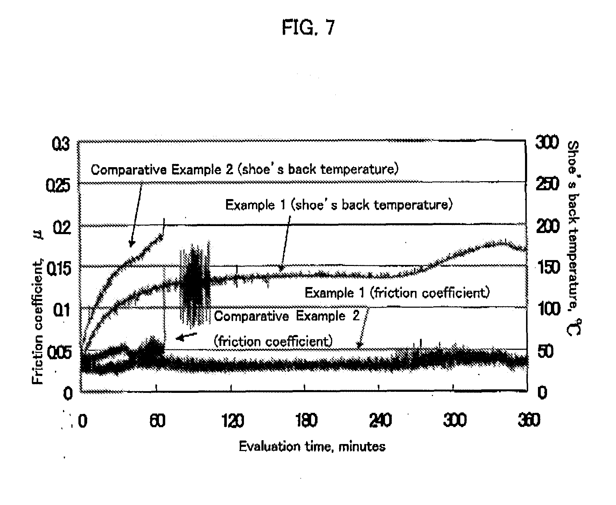

The time-varying temperature of the back of shoe 3 brought in contact with the swash plate 2 and the time-varying friction coefficient of the swash plate 2 in testing of the high-pressure atmosphere frictional abrasion are graphed in Fig. 7. From the graphs shown in Fig. 7, it is obvious that the swash plate obtained in Example 1 causes small variations in both temperature of the shoe' s back and friction coefficient thereof with a lapse of time for the long term as compared with the swash plate obtained in Comparative Example 2, and it is apparent that the swash plate obtained in Example 1 can be used with stability for the long term.

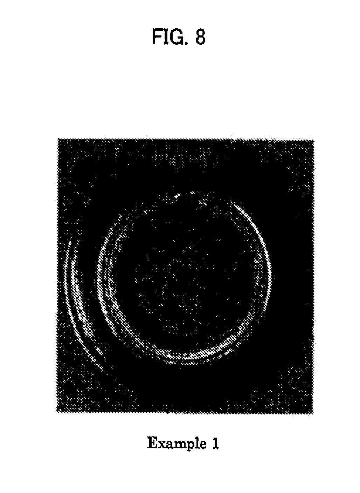

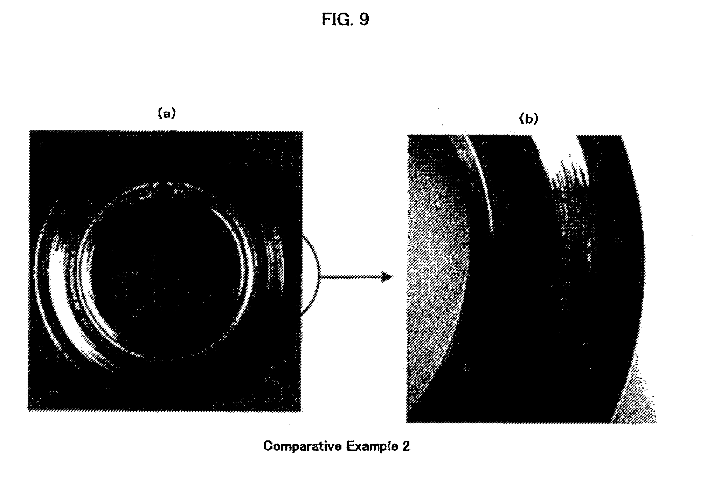

In addition, the outward appearance of the swash plate obtained in Example 1 after the conclusion of the rotating load test is shown in Fig. 8, and in Fig. 9 is shown the outward appearance of the swash plate obtained in Comparative Example 2 after the conclusion of the rotating load test. In Fig. 9, (a) is the entire outward appearance of the swash plate, and (b) is a magnified part of the outward appearance. According to these figures, the iron-base member surface of the swash plate obtained in Comparative Example 2 is exposed, thereby, seizure occurs. Therefore, it is evident that the damage to the resin film which the swash plate obtained in Example 1 sustained after using is far slighter than that which the swash plate obtained in Comparative Example 2 sustained after using, that is, it is also clear from these figures that the swash plate obtained in Example 1 can be used for the long term with stability.

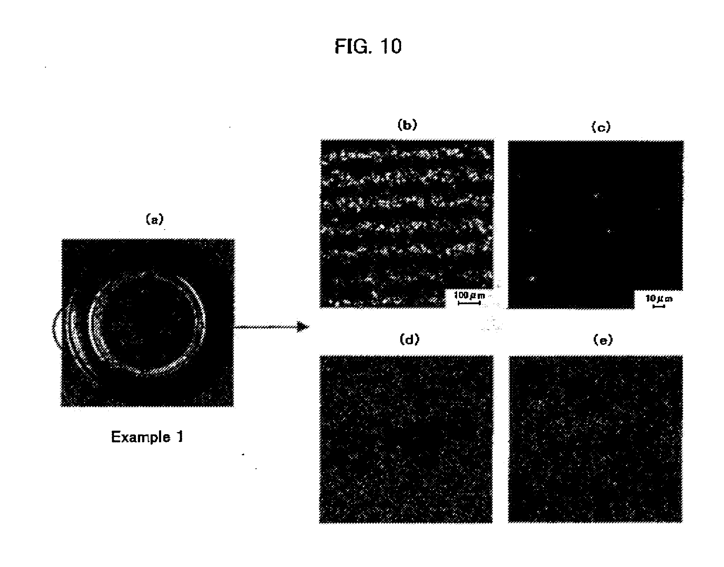

Further, the outward appearance of the swash plate obtained in Example 1 after the conclusion of the rotating load test is shown in Fig. 10. In Fig. 10, Fig. 10 (a) is the entire outward appearance in its entirety as shown in Fig. 8, Fig. 10 (b) is the outward appearance of a part of the swash plate magnified 100 times with a scanning electron microscope, Fig. 10(c) is the outward appearance of a part of the swash plate magnified 500 times with a scanning electron microscope, Fig. 10(d) is a result of analyzing the C component in the swash plate by EDX, and Fig. 10 (e) is a result of analyzing the Zn component in the swash plate by EDX. As is apparent from Fig. 10, the chemical conversion coating of zinc calcium phosphate in the swash plate obtained in Example 1 exposes, however, it is apparent that the effect of this condition upon sliding performance is not greater than the case of exposure of the iron-base member such as Comparative Example 2.

While the present invention has been described in detail and with reference to specific Examples thereof, it will be apparent to a person skilled in the art that various changes and modifications can be made therein without departing from the spirit and scope thereof. This application is based on Japanese Patent Application filed in December 21, 2007 (Application number 2007-330698), the entire description of which is incorporated herein by reference.

### Industrial Applicability

According to the invention, the chemical conversion coating formed as the intermediate layer causes no generation of gas through cracking even when the resin film is cured at high temperatures of 200°C or higher, consequently, the sliding member for thrust bearing which has excellent heat resistance enough to resist high temperatures of 200°C or higher can be provided.
In addition, the surface area of the base member is increased by performing shot blast treatment prior to chemical conversion coating process, and thereby adhesion between the iron-base member and the chemical conversion coating is improved.
Further, even when an underlayer of the sliding member is exposed by sliding in longtime use, since the chemical conversion coating and the resin film are present in a mixed condition, the present sliding member is resistant to occurring seizure as compared with the case where the mating member is mainly composed of iron. More specifically, even when both the resin film and the chemical conversion coating wear out and the iron-base member is exposed in convex areas of the iron-base member surface roughened by shot blast treatment, either the chemical conversion coating or the resin film, or both remain in concave areas of the roughened base member surface, consequently, the present sliding member is resistant to occurring seizure to the mating member as compared with the case where the iron-base member having a smooth surface without performing shot blast treatment is exposed.

## Claims

1. A sliding member for a thrust bearing, wherein
a chemical conversion coating of zinc calcium phosphate is formed on an iron-base member treated by a shot blast treatment, and
a resin film including a thermosetting resin required curing at temperatures of 200°C or higher and a solid lubricant is formed.

2. The sliding member for thrust bearing as set forth in claim 1, wherein
the thermosetting resin is a polyamide resin or a polyamideimide resin.

3. The sliding member for thrust bearing as set forth in claim 1 or 2, wherein
the solid lubricant is at least one of substance selected from the group including fluorocarbon polymers, graphite and molybdenum disulfide.
